# EUROPEAN PATENT APPLICATION

(11) **EP 2 048 593 A2**
(43) Date of publication of application: **15.04.2009**
(21) Application number: 08253292.0
(22) Date of filing: 09.10.2008
(51) Int. Cl.: G06F 21/00, G06Q 30/00, G11B 20/00, H04L 29/06, A63F 13/12

(54) **Content providing system, content providing method, and optical disk**

(30) Priority: 10.10.2007 JP 2007264415
(71) Applicant: Hitachi Ltd. and Hitachi-LG Data Storage, Inc., Tokyo 100-8280 (JP); Hitachi-LG Data Storage, Inc., Tokyo 108-0022 (JP)
(72) Inventor: Uchiyama, Osamu, Tokyo 100-8220 (JP)
(74) Representative: Calderbank, Thomas Roger

(57) **Abstract**

A terminal transmits disk identification information and user information to a content delivery server for purchase of initial content in the case where the content to be stored in an optical disk is provided to a user. The user information and the content delivered by the content delivery server are written on the optical disk. The optical disk storing the initial content is set in the terminal for purchase of additional content. The terminal transmits, to the content delivery server, disk identification information, the user information and content information. The content delivery server determines whether or not the purchase of the additional content is authorized. When the content delivery server determines that the purchase of the additional content is authorized, the content delivery server delivers the additional content to the terminal. The terminal writes the additional content on the optical disk. It is therefore possible to prevent content from being copied and obtained in an unauthorized manner and provide content based on preferences and characteristics of the user.

## Description

The present invention relates to a content providing system, a content providing method and an optical disk, and more particularly to a content providing system, a content providing method and an optical disk, which are suitable to provide for a user additional content, which attracts a user's interest, in the case where the content that should be protected by a copyright and stored on the optical disk is provided for the user.

Digital techniques have been developed to allow digitalized video and audio content to be provided to users and to be reproduced by information processing devices of the users. This is a general trend.

In such a method for providing content, the content is stored in a server, and a user downloads desired content through anetwork. The user enters a user ID, password, etc. in a terminal. The server authenticates the user ID, the password, etc. When the server verifies that the user is authorized, the server permits the user to download content.

In connection with the method for providing content, JP-A-2003-99658 discloses a content selling method for selling an album application to a user and providing content to the user based on a purchase history. JP-A-2004-13231 discloses a technique for using a database to manage a content purchase history and an operation history and recommending content optimal for a user to sell the content.

In another method for providing content, content is written on a medium such as an optical disk, and the medium storing the content is sold. A user purchases the medium and sets the medium in a video device, a computer, or the like. The video device, computer or the like reproduces the content stored in the medium.

When a server provides content through a network, a content provider does not manage the content after the content is delivered. Therefore, a problem is how to prevent the content from being copied in an unauthorized manner and protect a copyright related to the content.

When a user purchases content stored in a medium such as an optical disk, a purchase history record and the like of the user are not recorded, unlike the case where the content is delivered through a network. Therefore, a business of selling content may not expand. In general, a user who purchased movie content may watch a sequel to the movie from the standpoint of an interest of the user. In the case where a medium such as an optical disk storing content is provided to a user, a problem is how to promote a purchase of the content based on preferences and characteristics of the user.

It is, therefore, a preferable object of the present invention to provide a technique for preventing content from being copied and obtained in an unauthorized manner and for delivering content based on preferences and characteristics of a user in the case where the content to be stored in an optical disk is provided for the user.

A content providing system according to the present invention includes a content delivery server and a terminal. The content delivery server delivers content to the terminal. The terminal is connected with the content delivery server through a network.

In order to initially purchase content, an optical disk is set in the terminal, and reading means such as a card reader reads information on a membership card. Then, the terminal transmits disk identification information and user information to the content delivery server.

The content delivery server stores, in a database, the disk identification information, the user information and information indicating that content to be stored on the disk having the disk identification information is provided to a user having the user information.

The user information and the content delivered by the content delivery server are written on the optical disk by the terminal.

The optical storing the initial content is set in the terminal when the user attempts to purchase additional content.

The terminal transmits, to the content delivery server, the disk identification information, the user information written on the optical disk, and content information written on the optical disk.

The content delivery server determines whether or not the purchase of the additional content is authorized based on the following information: the information transmitted from the terminal for the purchase of the initial content and stored in the database; the disk identification information transmitted from the terminal for the purchase of the additional content; the user information written on the optical disk; and the content information written on the optical disk. When the content delivery server determines that the purchase is authorized, the content delivery server permits the terminal to download the additional content.

The terminal writes the additional content downloaded to the terminal on the optical disk.

In addition, the terminal may write additional content purchase program on the optical disk when the initial content is purchased. A computer placed at home may execute the program to purchase additional content.

Furthermore, the initial content may be provided as a package. In this case, only the disk identification information and the initial content are written on the optical disk; and when the user attempts to purchase additional content, the content delivery server uses the user information to determine whether or not the purchase of the additional content is authorized.

When the optical disk has first and second recording layers, the initial content may be written in the first recording layer, and the additional content may be written in the second recording layer.

In addition, when the optical disk has a first recording layer on one of surfaces thereof and a second recording layer on the other of the surfaces, the initial content may be written in the first recording layer, and the additional content may be written in the second recording layer.

IN THE DRAWINGS:
Fig. 1 is a diagram showing the configuration of a content providing system according to a first embodiment of the present invention.
Fig. 2 is a diagram showing the hardware configuration of the content providing systemaccording to the first embodiment.
Fig. 3 is a flowchart showing processing performed by a content providing server.
Figs. 4A and 4B are a diagram showing the status of an optical disk and a screen displayed on a display unit 16 when a user attempts to purchase content.
Figs. 5A and 5B are diagrams each showing writing of data on an optical disk according to the first embodiment.
Fig. 6 is a diagram showing the hardware configuration of a content providing system according to a second embodiment of the present invention.
Figs. 7A and 7B are diagrams each showing writing of data on an optical disk according to the second embodiment.
Fig. 8 is a diagram showing the hardware configuration of a content providing system according to a third embodiment of the present invention.
Figs. 9A and 9B are diagrams each showing writing of data on an optical disk according to the third embodiment.
Figs. 10A and 10B are diagrams showing an example of an optical disk having two recording layers on one surface thereof.
Figs. 11A and 11B are diagrams showing an example of an optical disk having recording layers on both surfaces thereof.

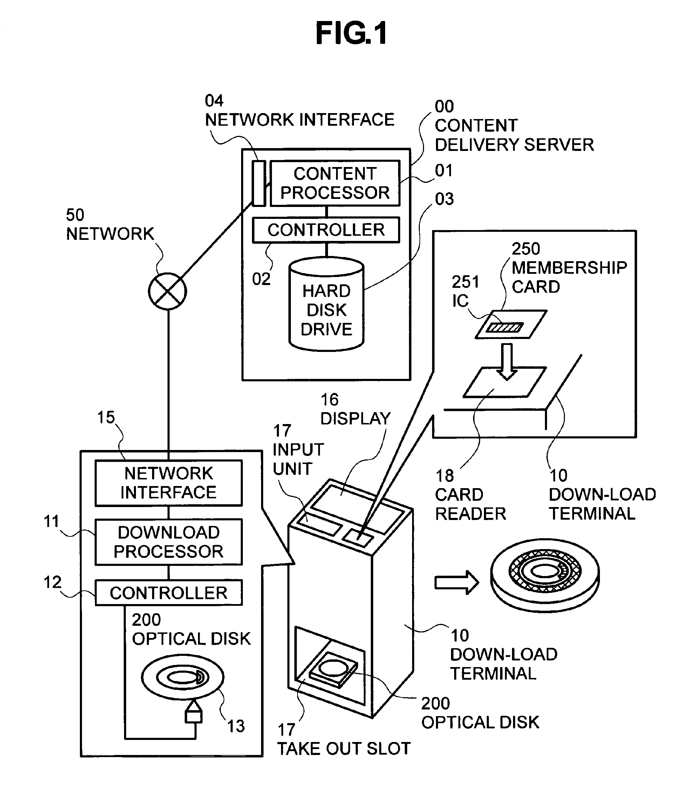

Embodiments of the present invention are described by way of example below with reference to Figs. 1 to 11B.

### First Embodiment

The first embodiment of the present invention is described below with reference to Figs. 1 to 5B.

First, the configuration of a content providing system according to the first embodiment of the present invention is described below.
Fig. 1 is a diagram showing the conf iguration of the content providing system according to the first embodiment.

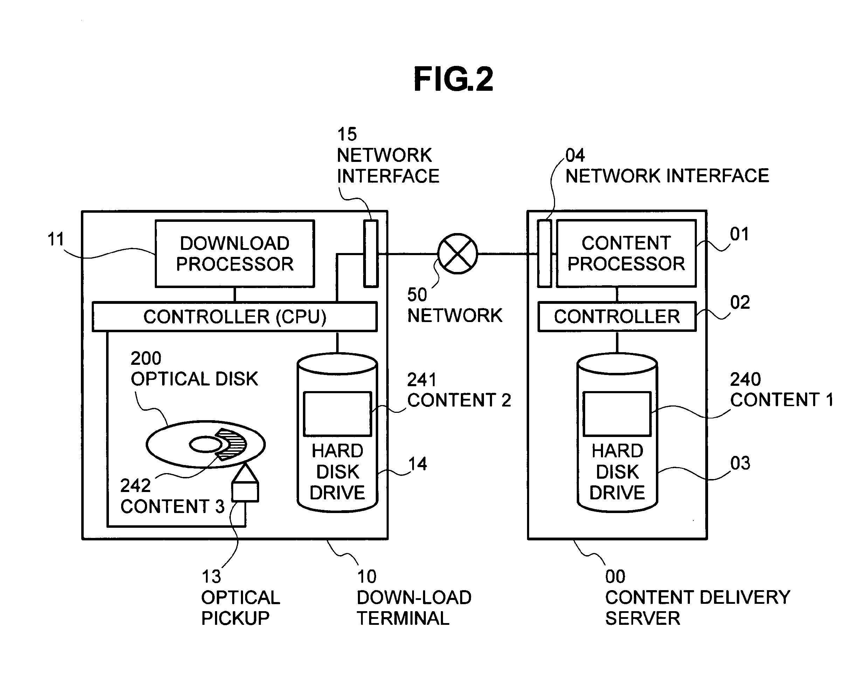

Fig. 2 is a diagram showing the hardware configuration of the content providing system according to the first embodiment.

As shown in Fig. 1, the content providing system according to the present embodiment has a content delivery server 00 and a download terminal 10. The content delivery server 00 and the download terminal 10 are connected through a network 50.

The content delivery server 00 has a content processor 01, a controller 02, a hard disk drive 03 and a network interface 04, as shown in Fig. 2.

The content processor 01 executes processing related to content 1 (240) stored in the hard disk drive 03. The controller 02 controls the entire content delivery server 02. The content 1 (240) stored in the hard disk drive 03 is transmitted from the network interface 04 through the network 50 to the download terminal 10.

The download terminal 10 has a download processor 11, controller 12, an optical pickup 13, and a hard disk drive 14, a network interface 15, as shown in Fig. 2. The download terminal 10 also has, as external interfaces, a display unit 16, an input unit 17 and a card reader 18, as shown in Fig. 1.

The download processor 11 is operable to receive the content stored in the content delivery server 00 through the network 50 and the network interface 15.

The controller 12 provides commands to control the entire download terminal 10, execute processing related to downloading, and execute processing for writing content on an optical disk.

The content delivered from the content delivery server 00 is stored in the hard disk drive 14 as content 2 (241). The content is written on the optical disk as content 3 (242) based on a command provided from the controller 12.

The card reader 18 is a device for reading information included in a membership card 250. The display unit 16 displays information for a user. The information displayed by the display unit 16 includes processing information, content information, and information related to the optical disk. The input unit 17 receives an instruction and data from the user. The input unit 17 is a touch panel, a push button, or the like.

Next, a description will be made of the processing of the content providing system according to the first embodiment when the user attempts to purchase content, with reference to Figs. 1 to 4B.

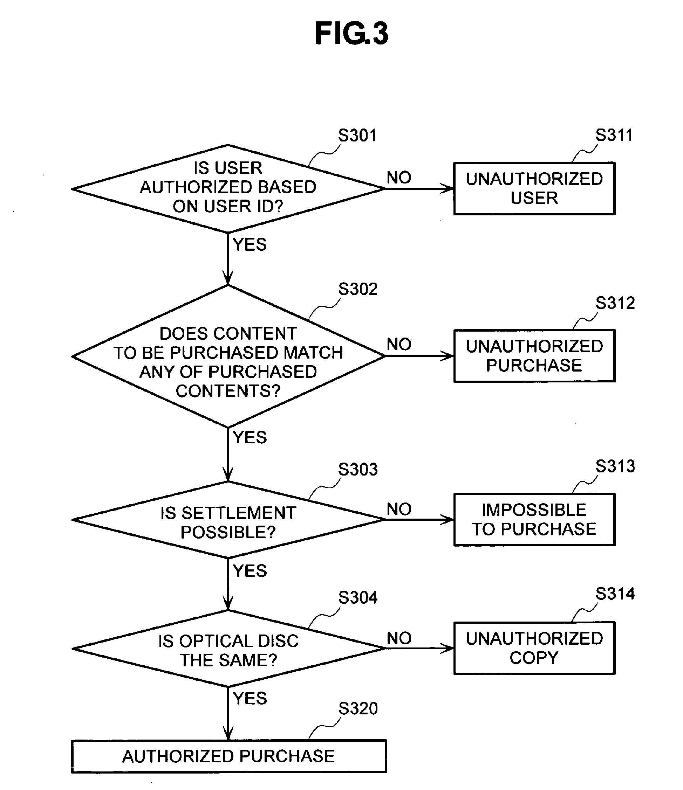

Fig. 3 is a flowchart of the processing of the content delivery server.

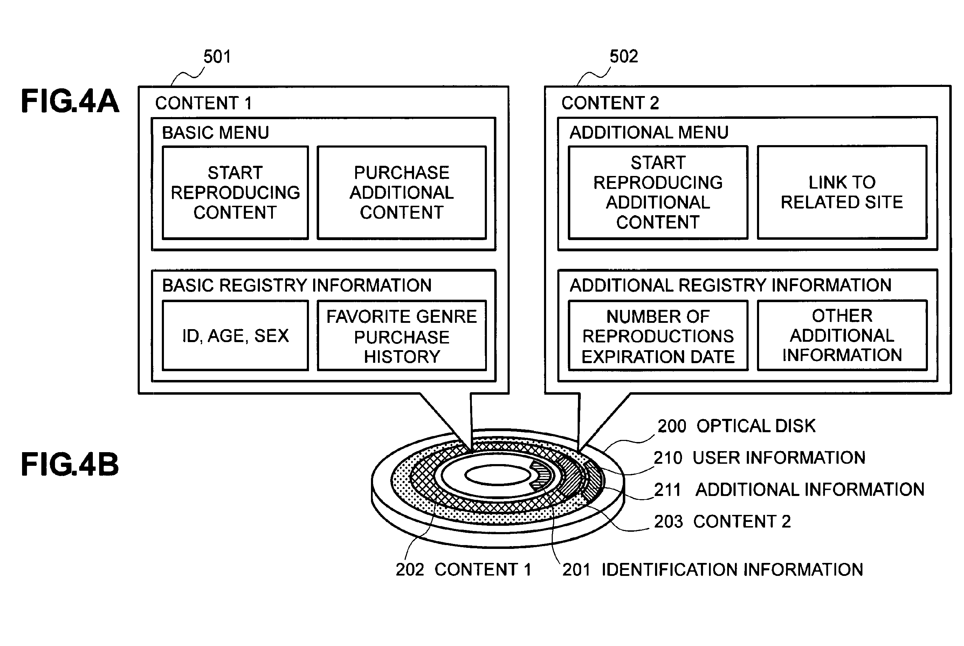

Figs. 4A and 4B are diagrams showing a screen displayed on a display unit 16 and the status of an optical disk when the user purchases content.

### (I) When the user purchases content for the first time

The user is registered as a member in advance. The user information is registered in a database provided in the content delivery server 00.

A content provider issues, to the user, the membership card 250 that includes an IC 251 having the user information stored therein.

When the user attempts to purchase content, the user information is read by the card reader 18 of the download terminal 10 and authenticated by the content delivery server 00. When the membership card is not to be issued, a user ID, a password and the like may be entered into the input unit.

Payment of the content fee can be made by the user putting cash into the download terminal 00 or by the credit function of the membership card 250 being used to withdraw the fee amount from an account of the user.

A blank optical disk 200 (in which no data is written) is set in the download terminal 10. The display unit 16 displays the title of content, and the user specifies the title of the content for purchase of the content. Then, the download terminal 10 uploads, through the network 50 to the content delivery server 00, the user information; disk identification information 201 on the optical disk 200 on which the content is to be written; and information on the specified content.

The content delivery server 00 authenticates the user who attempts to purchase the content based on the user information. When the content delivery server 00 determines that the user is authorized, the disk identification information 201 is stored in the database. Then, the content delivery server 00 delivers the specified content to the download terminal 10 through the network 50. Then, the content delivery server 00 registers to the database a history record in which the content is purchased by the user and written on the optical disk 200 having the disk identification information 201.

The delivered content is stored in the hard disk drive 14 of the download terminal 10.

The delivered content and the user information are written on the optical disk 200. It is necessary that the optical disk 200 be a medium such as a writable DVD-RW and a writable DVD-R.

In the above description, the user receives the issued card in advance. A user ID may be given to the user and registered as a member when the initial content is issued.

### (II) In the case where the user purchases additional content

When the user attempts to purchase additional content, it is necessary that the optical disk 200 storing the user information and the previously purchased content be prepared. In this case, it is not necessary that the card be read and the user ID be entered in the input unit.

The optical disk storing the user information and the content 1 is set in the download terminal 10 for the purchase of the additional content.

The display unit 16 displays a content 1 menu 501 shown in Fig. 4A. The content 1 menu 501 includes a "basic menu" section and a "basic registry information" section. In the "basic menu" section, a "start reproducing content 1" subsection and a "purchase additional content" subsection are included. In the "basic registry information" section, the user information written on the optical disk is displayed.

The user selects the "purchase additional content" subsection from the "basic menu" section.

When the "purchase additional content" subsection is selected, the download terminal 10 transmits, to the content delivery server 00, part of the user information (the part of the user information is necessary for the content delivery server), the content information written on the optical disk, and the disk identification information.

The user information includes user profile information and secondary information. The user profile information includes a user ID, age, sex and the like of the user as shown in Fig. 4A. The secondary information includes a favorite genre, a purchase history record and the like of the user.

The content delivery server 00 determines whether or not the content delivery server 00 delivers the content based on the information transmitted from the download terminal 10. The process for determining whether ornot the content delivery server 00 delivers the content is described with reference to a flowchart shown in Fig. 3.

First, the content delivery server 00 authenticates the user based on the user ID included in the user information transmitted from the download terminal 10 in step S301. When the user is unauthorized, the content delivery server 00 determines that the access is from an unauthorized user, rejects the purchase of the content, and transmits to the download terminal 10 a message to that effect in step S311.

Then, the content delivery server 00 compares the content information with the purchase history record included in the user information to confirm whether or not the content to be purchased matches any of purchased content in step S302. When the content to be purchased does not match any of the purchased content, the content delivery server 00 determines that the user attempts to purchase the content in an unauthorized manner, and transmits to the download terminal 10 a message to that effect in step S312.

Then, the content delivery server 00 confirms whether or not settlement for the purchase of the content is possible in step S303. For example, the content delivery server 00 communicates with a credit card company server about credit information of the user. When the settlement is not possible, the content delivery server 00 determines that the purchase is not possible and transmits to the download terminal 10 a message to that effect in step S313.

When the additional content is delivered for free, the processing in step S303 may not be required.

Then, the content delivery server 00 checks the disk identification information. The content delivery server 00 determines whether or not the disk identification information is the same as the disk identification information used for the previous purchase. When the content delivery server 00 determines that the disk identification information is not the same as the disk identification information used for the previous purchase, the content delivery server 00 determines that an unauthorized copy is attempted, and transmits to the download terminal 10 a message to that effect in step S314.

When the determinations in step S301 to S304 are affirmative, the content delivery server 00 determines that the purchase is authorized and permits the purchase of the additional content in step S320.

The download terminal 10 writes the downloaded additional content on the optical disk.

### (III) User interfaces to allow the user to reproduce content, purchase additional content, and confirm information

When an optical disk recorder/reproducer reproduces content stored in an optical disk that is purchased by the user, the display unit displays the content 1 menu 501 shown in Fig. 4, for example. After additional content is purchased, the display unit also displays a content 2 menu 502.

The user can instruct to start reproducing the content and to purchase additional content from the basic menu of the content 1 menu 501.

When the user needs to confirm the user information written on the optical disk, the user selects a corresponding part of the basic registry information to cause the display unit to display the user information.

In addition, the user can instruct to start reproducing the additional content and to display a link to a related site from an additional menu included in the content 2 menu 502.

When the link to a related site is selected, a web browser starts, and a related web page is displayed.

When the user needs to confirm additional information written on the optical disk, the user selects a corresponding part of the additional registry information to cause the display unit to display the additional information.

In Fig. 4A, the number of reproductions and an expiration date are displayed as an example. As other additional information, information on a preview of a sequel, introduction of a making company and the like can be considered.

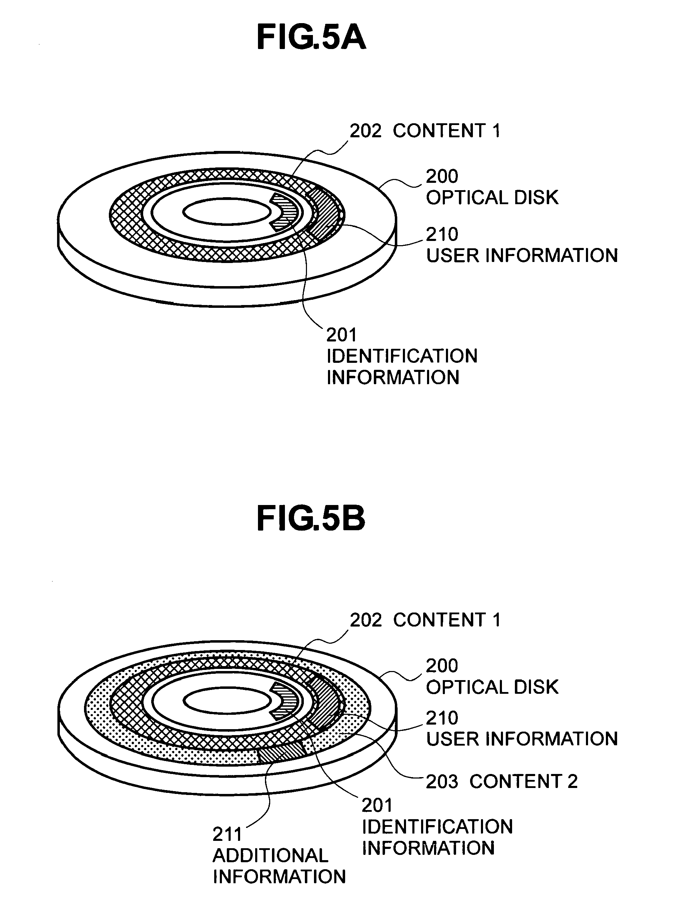

Next, the optical disk according to the first embodiment will be described with reference to Figs. 5A and 5B.

Figs. 5A and 5B are diagrams showing writing of data on the optical disk according to the first embodiment.

In the present embodiment, the optical disk having one recording layer on one surface thereof is described below.

The disk identification information 201 is written on the optical disk 200 according to the present embodiment as shown in Fig. 5A. The disk identification information 201 is used to determine whether or not the optical disk 200 is authorized. When the user purchases initial content 1 (202), the content 1 (202) and user information 210 are written on the optical disk 200 as shown in Fig. 5A.

As described above, the user information includes the user profile information and the secondary information. The user profile information includes a user ID, authentication password, name, age, sex, address, phone number, email address, and occupational information. The secondary information includes a favorite genre, hobby, and content purchase history such as a magazine and newspaper purchased by the user. The expiration date and the number of reproductions may include additional information on the content.

As the content, a video content such as a movie content stored in an optical disk, a music content stored in an optical disk, and a game content stored in an optical disk can be considered.

When the user purchases additional content 2 (203), the content 2 (203) and additional information 211 are additionally written on the optical disk 200 as shown in Fig. 5B.

As described above, the additional information 211 includes the number of reproductions of the additional content, the expiration date of the additional content, information on a preview of a sequel to the additional content, and introduction and advertisement of the making company.

In the scheme of delivering content according to the present embodiment, a shop sets a blank disk in the download terminal 10, and the content delivery server 00 delivers initial content to the download terminal 10. Therefore, an advantage is that it is not necessary that content be stocked.

### Second Embodiment

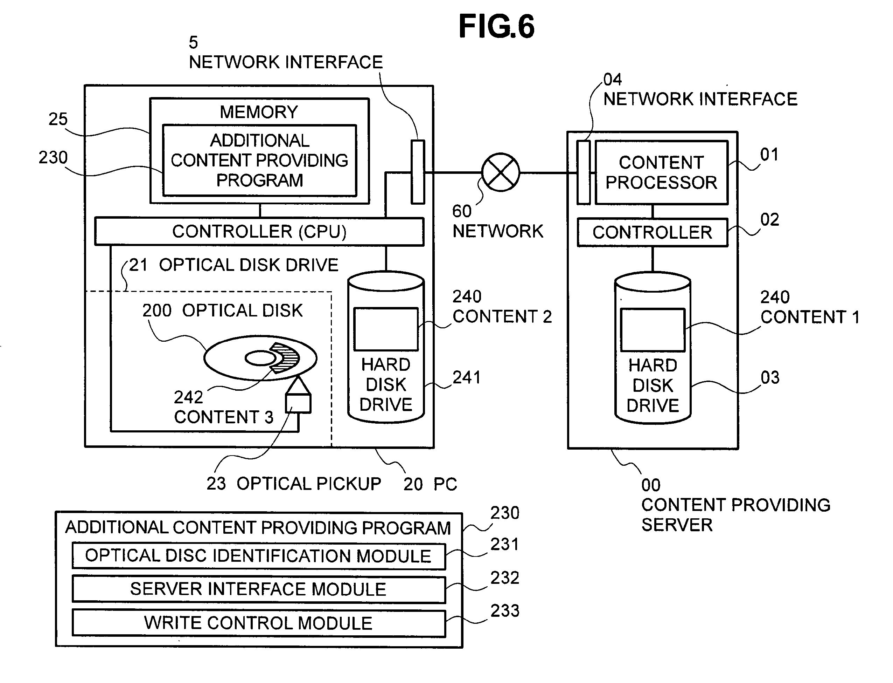

The second embodiment of the present invention will be described below with reference to Figs. 6 to 7B.

Fig. 6 is a diagram showing the hardware configuration of a content providing system according to the second embodiment.

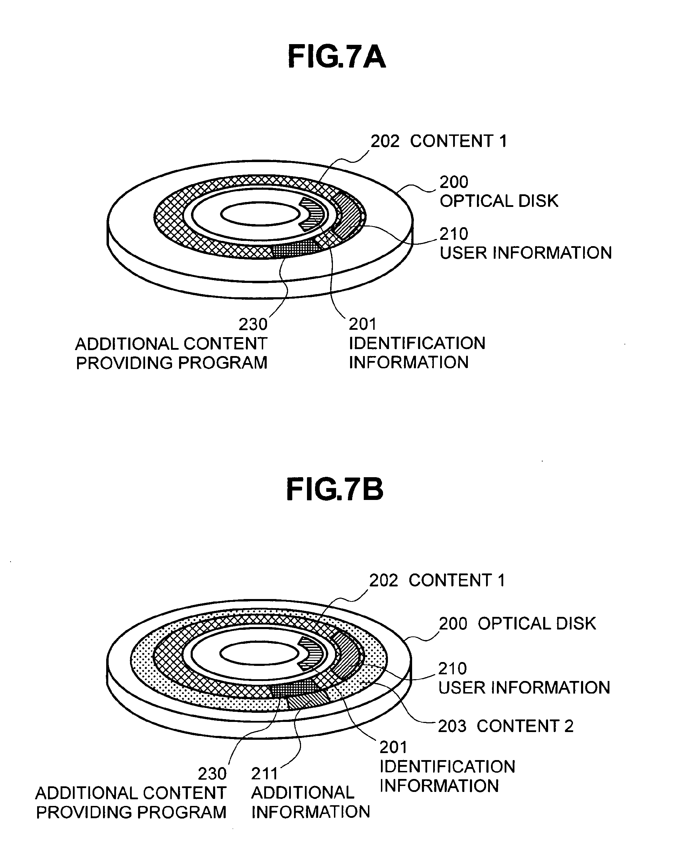

Figs. 7A and 7B are diagrams showing writing of data on the optical disk according to the second embodiment.

In the first embodiment, initial and additional contents are purchased by means of the download terminal 10 placed in the shop as an example.

In the second embodiment, additional content is purchased by means of a personal computer (of the user) as an example.

The user who purchased the initial content according to the first embodiment uses a personal computer (PC) 20 to purchase additional content. Inordertopurchase the additional content, the optical disk 200 is set in an optical disk drive 21 provided in the PC 20. The content delivery server 00 used in the second embodiment has the same configuration as that of the content delivery server 00 used in the first embodiment. The content delivery server 00 used in the second embodiment is connected with the Internet 60 as shown in Fig. 6.

In addition to the user information 210, additional content providing program 230 is written on the optical disk 200 used in the present embodiment when the initial content is purchased. When the optical disk 200 is set in the optical disk drive 21, the additional content providing program 230 is automatically executed and loaded in a memory 25 or is loaded in the memory 25 based on a specific instruction from the user. A controller (CPU) 22 executes the additional content providing program 230.

The additional content providing program 230 is composed of an optical disk identification module 2301, a server interface module 2302 and a write control module 2303.

When the additional content providing program 230 is executed, the optical disk identification module 2301 recognizes the set optical disk 200 as a target disk on which the additional content is to be written. The server interface module 2302 reads the user information, the content information and the disk identification information and transmits the three types of information to the content delivery server 00.

When the content delivery server 00 permits the purchase of the additional content, the content delivery server 00 delivers the additional content to the PC 20. The procedures for the permission of the purchase by the content delivery server 00 are the same as those in the first embodiment. The server interface module 232 included in the additional content providing program 230 receives the additional content and additional information, which are to be written on the optical disk. The write control module 2303 instructs the optical disk drive 21 to write the additional content and the additional information on the optical disk.

In the present embodiment, the additional content can be purchased by using a PC placed at home. An advantage is that additional content can be purchased easily. A content provider can expect an effect of sales promotion.

### Third Embodiment

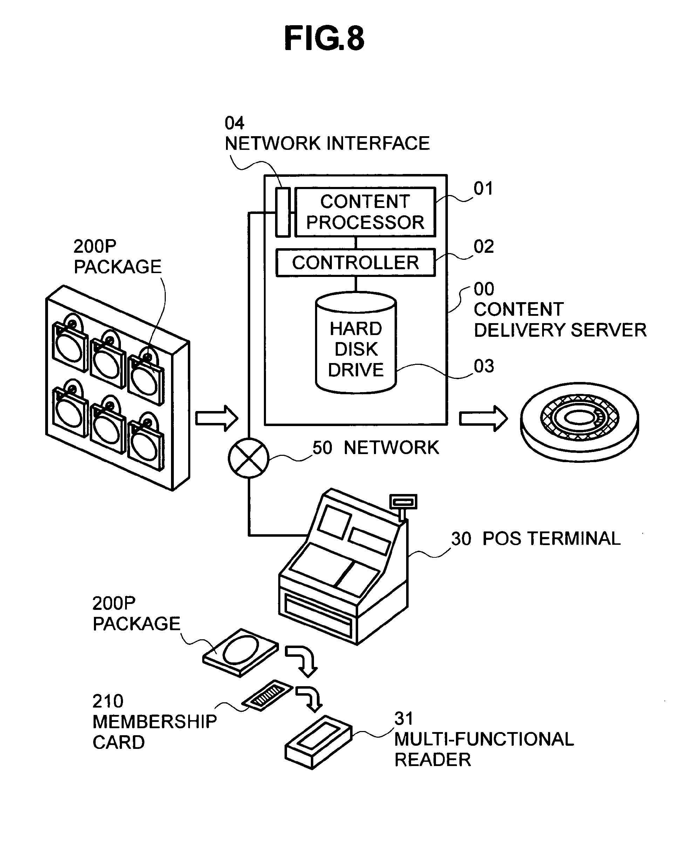

The third embodiment of the present invention will be described below with reference to Figs. 8 to 9B.

Fig. 8 is a diagram showing the configuration of a content providing system according to the third embodiment.

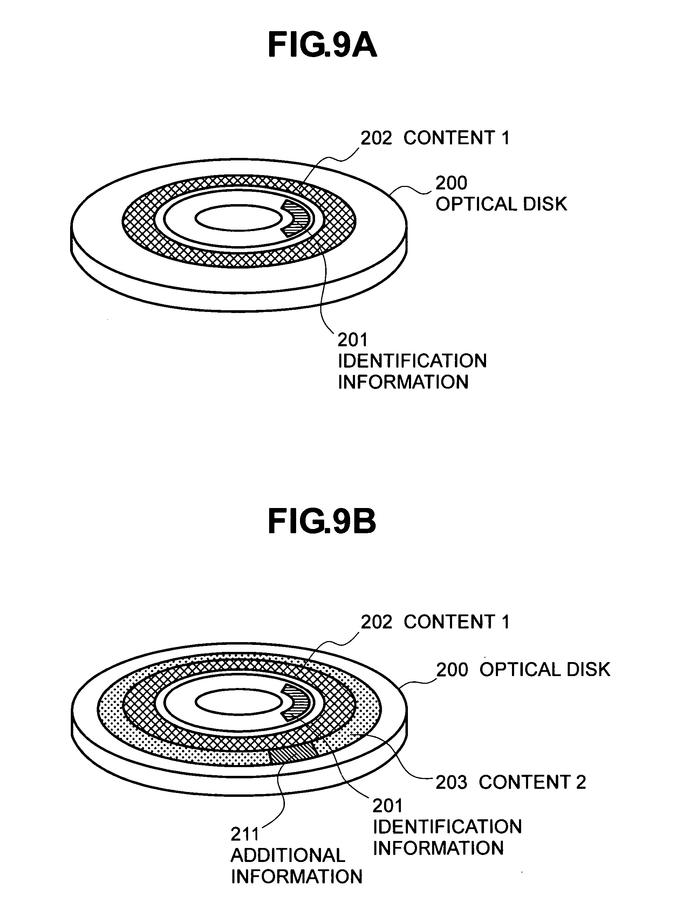

Figs. 9A and 9B are diagrams showing writing of data on the optical disk according to the third embodiment.

In the first embodiment, the method for providing content is described, in which after the initial content is purchased by means of the exclusive download terminal, the additional content is purchased by means of the same download terminal.

In a method for providing content according to the third embodiment, the initial content is already written on an optical disk. After the user purchases the optical disk, the user uses the download terminal or a PC placed at home to purchase additional content.

The content providing system according to the third embodiment includes a point-of-sale (POS) terminal 30 and the content delivery server 00, which are connected with each other through the network 50.

The POS terminal 30 is connected with a multi-functional reader 31. The POS terminal 30 is capable of transmitting data to the content delivery server 00 through the network 50.

The disk identification information 201 and the content 1 (202) are written on the optical disk 200 according to the third embodiment. The user views a package 200p to select and purchase a necessary content.

When the user attempts to purchase the additional content, the multi-functional reader 31 connected with the POS terminal 30 reads the membership card 31 and disk identification information, and the POS terminal 30 transmits the information read by the multi-functional reader 31 to the content delivery server 00. Then, a history record indicating the purchase of the content (by the user having the membership card 210) written on the optical disk having the disk identification information is registered in the database of the content delivery server 00 to ensure that the disk identification is associated with the user information.

The disk identification information may be printed on the surface of the optical disk 200. Alternatively, the disk identification information may be printed on a package in a bar code form and read by a bar code reader.

In order to purchase additional content, the following two methods can be performed. In one of the methods, the additional content is written on the optical disk 200 by means of the download terminal 10 in the same manner as in the first embodiment. In the other of the methods, the additional content is written on the optical disk 200 by means of the PC 20 placed at home.

The user information is not written on the optical disk 200 according to the present embodiment. In the present embodiment, when the download terminal 10 is used to attempt topurchase the additional content and the content delivery server 00 needs to authenticate the user ID, it is necessary that the card reader 18 read the membership card 210. When the PC terminal is used to attempt to purchase the additional content and the content delivery server 00 needs to authenticate the user ID, it is necessary that the user ID, password and the like be input in the PC terminal.

A process for determining whether or not the content is delivered based on the received information by the content delivery server 00 is the same as that shown in Fig. 3 in the first embodiment.

In the present embodiment, although the shop needs to stock content packages, purchase motivation of the user is stimulated by the content packages.

### Fourth Embodiment

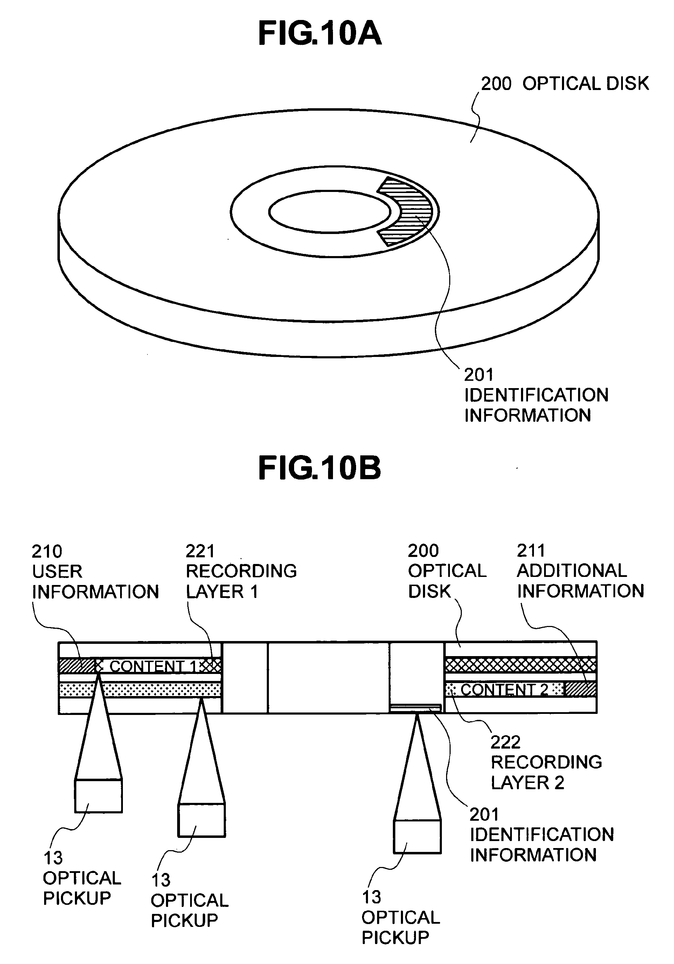

The fourth embodiment of the present invention is described below with reference to Figs. 10A to 11B.

Figs. 10A and 10B are diagrams showing an example of an optical disk having two recording layers on one surface thereof.

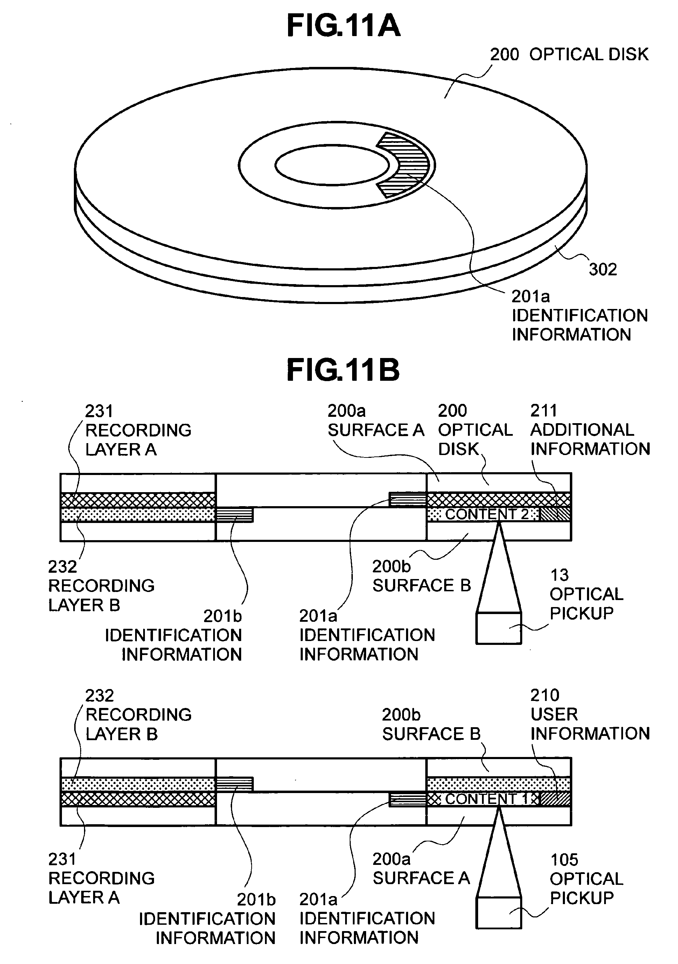

Figs. 11A and 11B are diagrams showing an example of an optical disk having recording layers on both surfaces thereof.

The first embodiment describes the optical disk 200 that is used for the purchase of the content and uses a recording method other than the recording methods shown in Figs. 10A to 11B.

In the present invention, the optical disk (shown in Figs. 10A and 10B) having two recording layers on one surface thereof and the optical disk (shown in Figs. 11A and 11B) having recording layers on both surfaces thereof can be used, in addition to the optical disk having a single recording layer on one surface thereof as described in the first embodiment.

As shown in Fig. 10B, the optical disk has first and second recording layers on one surface thereof. The initial content and the user information are written in the first recording layer 1 (221). The additional content and the additional information are written in the second recording layer 2 (222). This is desirable for management of the content. The additional content and the additional information may be written in the first recording layer 1 (221) to save the capacity.

As shown in Figs. 11A and 11B, the optical disk has a first recording layer A (231) on a surface A 200a thereof and a second recording layer B (232) on a surface B 200b thereof. The initial content and the user information are written in the first recording layer A (231). The additional content and the additional information are written in the second recording layer B (232). The additional content and the additional information may be written in the first recording layer A (231).

When the optical disk (shown in Figs. 11A and 11B) having the recording layers on both surfaces thereof is used, an optical pickup 13 outputs a laser beam to one of the surfaces. In order to write data in the second recording layer B (232) and reproduce the data written in the second recording layer B (232) after data is written in the first recording layer A (231) or after the data written in the first recording layer A (231) is reproduced, it is necessary that the optical disk be turned over and set.

When the optical disk (shown in Figs. 10A and 10B) having the two recording layers on one surface thereof is used, both the first recording layer 1 (221) and the second recording layer 2 (222) typically conform to DVD-RW specifications or DVD-R specifications. However, the first recording layer 1 (221) may conform to (read-only) DVD-ROM specifications, and the second recording layer 2 (222) may conform to writable DVD-RW specifications or writable DVD-R specifications.

In this case, only the disk identification information and the initial content are written in the read-only first recording layer 1 (221), and the additional content and the additional information are written in the writable second recording layer 2 (222).

Further, when the issuer of the optical disk 200 can obtain user information in advance and provides that user with content for the first time, the fourth embodiment allows the issuer to provide an optical disk in which the user information, as well as the disk identification information and the first content, is recorded onto the read-only first recording layer 1 (221). This applies, for example, to a case where a content provider obtains user information upon the user's application for the purchase of content in the form of membership-based purchase as would be practiced in, for example, "Movie Lovers' Club (hypothetical name)" and then provides to the user the media on which the content is written by mail or the like.

When the optical disk (shown in Figs. 11A and 11B) having the recording layers on both surfaces thereof is used, the first recording layer A (231) and the second recording layer B (232) typically conform to DVD-RW specifications or DVD-R specifications. However, the first recording layer A (231) may conform to (read-only) DVD-ROM specifications, and the second recording layer B (232) may conform to writable DVD-RW specifications or writable DVD-R specifications.

In this case, the provider of the optical disk 200 may provide for the user the optical disk 200 with the read-only first recording layer A (231) in which the disk identification information, the initial content and the user information (when possible) are written. When the user purchases the additional content, the additional content and the additional information are written in the second recording layer B (232).

### Another Embodiment

In the first to third embodiments, the optical disk such as a CD, DVD, Blu-ray Disc and HD DVD is used as the medium on which content is written. In the present invention, the user information, the initial content and medium identification information are written on the medium when the initial content is purchased, and the content delivery server determines whether or not the additional content can be purchased based on those types of information. This idea of the present invention can be applied to a memory stick, a memory card such as a compact flash card and a secure digital card, a removable hard disk drive such as a micro drive, a magnetic disk such as a floppy disk, a magnetic optical disk and the like.

### Effect of the Present Invention Which Can Be Understood From the Embodiments

As understood from the embodiments of the present invention, when the content stored on the optical disk is provided, it is possible to prevent the content from being copied and obtained in an unauthorized manner and provide the content based on preferences and characteristics of the user.

## Claims

1. A content providing system for delivering content that is to be written on an optical disk, comprising:
a content delivery server; and
a terminal connected with the content delivery server through a network, wherein
the terminal includes:
means for receiving user information;
means for transmitting the user information and information written on the optical disk to the content delivery server; and
means for receiving content from the content delivery server and writing the content on the optical disk,
the content delivery server includes a database for storing the user information, disk identification information and a history record indicating purchase of the content,
when the optical disk on which the content is to be stored is set in the terminal, the terminal transmits, to the content deliver server, the disk identification information, the user information, information indicating that the content to be stored on the optical disk having the disk identification information is provided to a user having the user information,
the terminal writes, on the optical disk, the user information and the content delivered by the content delivery server,
the content delivery server stores on the database the information transmitted from the terminal,
the terminal transmits, to the content delivery server, the disk identification information, the user information written on the optical disk, and the content information written on the optical disk in order to download additional content from the content delivery server and write the additional content on the optical disk storing the content delivered by the content delivery server,
the content delivery server determines whether or not purchase of the additional content is authorized based on the disk identification information transmitted from the terminal, the user information written on the optical disk and transmitted from the terminal, and the information transmitted from the terminal and indicating that the content stored on the optical disk having the disk identification information previously stored in the database is provided for the user having the user information,
when the content delivery server determines that the purchase of the additional content is authorized, the content delivery server delivers the additional content to the terminal through the network, and
the terminal writes, on the optical disk, the additional content transmitted from the content delivery server.

2. The content providing system according to claim 1, wherein
the terminal has a controller for executing a program,
when the optical disk on which the content is to be stored is set in the terminal, the terminal writes, on the optical disk, the user information, the content delivered by the content delivery server and additional content providing program, and
in order to download the additional content from the content delivery server and write the additional content on the optical disk storing the content delivered by the content delivery server, the terminal executes the additional content providing program to perform processing for identifying the optical disk, processing for transmitting, to the content delivery server, the disk identification information, the user information written on the optical disk and the content information written on the optical disk, and processing for writing the additional content on the optical disk.

3. A content providing system for delivering content that is to be written on an optical disk, comprising:
a content delivery server; and
a terminal connected with the content delivery server through a network, wherein
the terminal includes:
means for receiving user information;
means for transmitting the user information and information written on the optical disk to the content delivery server; and
means for receiving content from the content delivery server and writing the content on the optical disk,
the content delivery server includes a database for storing the user information, disk identification information and a history record indicating purchase of the content,
when the optical disk on which the content is to be stored is set in the terminal, the terminal transmits, to the content deliver server, the disk identification information, the user information, information indicating that the content to be stored on the optical disk having the disk identification information is provided to a user having the user information,
the content delivery server stores on the database the information transmitted from the terminal,
the terminal transmits, to the content delivery server, the disk identification information and the user information in order to download additional content from the content delivery server and write the additional content on the optical disk,
the content delivery server determines whether or not purchase of the additional content is authorized based on the disk identification information transmitted from the terminal, the user information transmitted from the terminal, and the information transmitted from the terminal and indicating that the content stored on the optical disk having the disk identification information previously stored in the database is provided for the user having the user information,
when the content delivery server determines that the purchase of the additional content is authorized, the content delivery server transmits the additional content to the terminal through the network, and
the terminal writes, on the optical disk, the additional content transmitted from the content delivery server.

4. The content providing system according to claim 1, wherein
the optical disk has first and second recording layers, and
the user information and the initial content are written in the first recording layer, and the additional content is written in the second recording layer.

5. The content providing system according to claim 3,
wherein
the optical disk has first and second recording layers, and
the initial content is written in the first recording layer, and the additional content is written in the second recording layer.

6. The content providing system according to claim 5, wherein
the first recording layer conforms to specifications of a read-only disk, and the second recording layer conforms to specifications of a writable disk.

7. A content providing method for delivering content that is to be written on an optical disk, comprising the steps of:
entering user information into a first information processing device for purchase of initial content;
causing the first information processing device to write the initial content and the user information on the optical disk;
causing the first information processing device to transmits, to a second information processing device, disk identification information, the user information, and information indicating that the content to be stored in the optical disk having the disk identification information is provided to a user having the user information;
causing the second information processing device to store the disk identification information transmitted from the first information processing device, the user information transmitted from the first information processing device, and the information transmitted from the first information processing device and indicating that the content to be stored in the optical disk having the disk identification information is provided for the user having the user information;
setting the optical disk storing the initial content and the user information in a third information processing device for purchase of additional content;
causing the third information processing device to transmit, to the second information processing device, the user information written on the optical disk, content information, and the disk identification information;
causing the second information processing device to determine whether or not the purchase of the additional content is authorized based on the disk identification transmitted from the first information processing device for the purchase of the initial content, the user information transmitted from the first information processing device for the purchase of the initial content, the information transmitted from the first information processing device for the purchase of the initial content and indicating that the content stored in the optical disk having the disk identification information is provided for the user having the user information, the user information written on the optical disk and transmitted from the third information processing device for the purchase of the additional content, the content information transmitted from the third information processing device for the purchase of the additional content, and the disk identification information transmitted from the third information processing device for the purchase of the additional content; and
when the third information processing device determines that the purchase of the additional content is authorized, causing the first information processing device to write the additional content on the optical disk.

8. A content providing method for delivering content that is to be written on an optical disk, comprising the steps of:
entering user information into a first information processing device for purchase of initial content;
causing the first information processing device to transmit, to a second information processing device, disk identification information, the user information, and information indicating that the content to be stored on the optical disk is provided to a user having the user information;
causing the second information processing device to store the disk identification information transmitted from the first information processing device, the user information transmitted from the first information processing device, and the information transmitted from the first information processing device and indicating that the content to be stored on the optical disk is provided for the user having the user information;
setting the optical disk storing the initial content in a third information processing device for purchase of additional content;
causing the third information processing device to transmit, to the second information processing device, the user information, content information and the disk identification information;
causing the second information processing device to determine whether or not the purchase of the additional content is authorized based on the disk identification transmitted from the first information processing device for the purchase of the initial content, the user information transmitted from the first information processing device for the purchase of the initial content, the information transmitted from the first information processing device for the purchase of the initial content and indicating that the content stored on the optical disk is provided for the user having the user information, the user information transmitted from the third information processing device for the purchase of the additional content, the content information transmitted from the third information processing device for the purchase of the additional content, and the disk identification information transmitted from the third information processing device for the purchase of the additional content; and
when the third information processing device determines that the purchase of the additional content is authorized, causing the first information processing device to write the additional content on the optical disk.

9. The content providing method according to claim 7, wherein
the optical disk has first and second recording layers, and
the user information and the initial content are written in the first recording layer, and the additional content is written in the second recording layer.

10. The content providing method according to claim 8, wherein
the optical disk has first and second recording layers, and
the initial content is written in the first recording layer, and the additional content is written in the second recording layer.

11. The content providing method according to claim 10, wherein
the first recording layer conforms to specifications of a read-only disk, and the second recording layer conforms to specifications of a writable disk.

12. An optical disk for storing a delivered content, wherein
disk identification information, user information and first content are written, and
second content is written when it is determined that the disk identification, the user information and the first content are authorized.

13. An optical disk for storing a delivered content, wherein
disk identification information and first content are written, and
second content is written when it is determined that the disk identification and the first content are authorized.

14. The optical disk according to claim 12, comprising first and second recording layers, wherein
the user information and the first content are written in the first recording layer, and the second content is written in the second recording layer.

15. The optical disk according to claim 14, wherein
the first recording layer conforms to specifications of a read-only disk, and the second recording layer conforms to specifications of a writable disk.

16. The optical disk according to claim 13, comprising first and second recording layers, wherein
the user information and the first content are written in the first recording layer, and the second content is written in the second recording layer.

17. The optical disk according to claim 16, wherein
the first recording layer conforms to specifications of a read-only disk, and the second recording layer conforms to specifications of a writable disk.
